# EUROPÄISCHE PATENTSCHRIFT

(11) **EP 0 481 276 B1**
(45) Veröffentlichungstag und Bekanntmachung des Hinweises auf die Patenterteilung: **23.06.1993**
(21) Anmeldenummer: 91116675.9
(22) Anmeldetag: 30.09.1991
(51) Int. Cl.: B23Q 3/157, B23Q 13/00

(54) **Werkzeugmaschine**
Machine tool
Machine-outil

(30) Priorität: 09.10.1990 DE 4031997
(43) Veröffentlichungstag der Anmeldung: 22.04.1992
(73) Patentinhaber: CHIRON-WERKE GMBH & CO. KG, 78532 Tuttlingen (DE)
(72) Erfinder: Rütschle, Eugen, Dipl.-Ing., W-7202 Mühlheim (DE); Winkler, Hans-Henning, Dr. Ing., W-7200 Tuttlingen (DE)
(74) Vertreter: Witte, Alexander, Dr.-Ing.

(56) Entgegenhaltungen:
- EP-A- 0 186 726
- EP-A- 0 356 830

## Beschreibung

Die Erfindung betrifft eine Werkzeugmaschine mit einer um eine Spindelachse rotierenden Spindel, mit einer relativ zu der Spindel in Richtung der Spindelachse verschiebbaren Hülse und mit einer Anzahl von Greifarmen, die um die Spindel herum verteilt angeordnet und an der Hülse befestigt sind, wobei jeder Greifarm einen einen Konus aufweisenden Werkzeughalter trägt und wobei jeder Werkzeughalter mittels des ihn tragenden Greifarmes aus einer von der Spindel beabstandeten Magazinposition einzeln mit dem Konus in eine Arbeitsposition in die Spindel einsetzbar ist, während die übrigen Werkzeughalter in der Magazinposition gehalten werden, in der sie jeweils in einen separaten, nach unten offenen Köcher eingeführt sind, der mindestens für den jeweiligen Konus eine Abdeckung bildet.

Eine Werkzeugmaschine der vorstehend genannten Art ist aus der DE-OS 38 29 105 bekannt.

Bei der bekannten Werkzeugmaschine ist an dem Spindelstock eine die Spindel umgebende Hülse vorgesehen, die relativ zu der Längsachse der Spindel verfahren werden kann. An der Hülse sind eine Vielzahl von Greifarmen befestigt, die an ihrem unteren Ende jeweils in einen Greifer auslaufen, der mit einem Werkzeughalter bestückt ist. Die Werkzeughalter sind mit Hilfe der Greifarme und durch Verschieben der Hülse wahlweise in eine Arbeitsposition in die Spindel einsetzbar.

Die Greifer sind Teil einer Parallelogrammführung, die dafür sorgt, daß die Werkzeughalter beim Verschwenken zwischen der Arbeitsposition und einer Magazinposition im wesentlichen vertikalachsig ausgerichtet gehalten werden. In der Magazinposition sind die Greifarme vertikal nach oben verschwenkt, so daß sich die Werkzeughalter oberhalb des Spindelkopfes im Bereich der Hülse befinden, wobei die Werkzeughalter mit ihren Konussen in Hohlräume eingeführt sind, die in einem radialen Vorsprung an der Hülse ausgebildet sind. Die Hohlräume dienen als Köcher für die Werkzeughalter und schützen diese vor in dem Arbeitsraum der bekannten Werkzeugmaschine fliegenden Metallspänen. Auf diese Weise wird sichergestellt, daß während eines Bearbeitungsvorganges keine Metallspäne auf die Konusse der als nächstes zu verwendenden Werkzeughalter gelangen und dort wegen des an ihnen befindlichen Bohrwassers kleben bleiben, was zu Problemen beim Einwechseln und Einspannen dieses Werkzeughalters führen würde.

Bei der bekannten Werkzeugmaschine ist ferner an jedem Greifarm ein Deckel vorgesehen, der beim Verschwenken des Greifarmes in die Arbeitsposition den nun von dem Werkzeughalter freigegebenen Hohlraum verschließt. Dadurch wird verhindert, daß Metallspäne in den Hohlraum gelangen, der dem in der Arbeitsposition befindlichen Werkzeughalter zugeordnet ist.

Die Greifer sind bei der bekannten Werkzeugmaschine so ausgelegt, daß die Werkzeughalter drehbar in ihnen gelagert sind, so daß der jeweilige Greifer auch in der Arbeitsposition des Werkzeughalters an diesem verbleiben kann. Die Greifer weisen aus diesen Gründen beträchtliche radiale Abmaße auf.

Bei der bekannten Werkzeugmaschine ist es von Nachteil, daß sich die Greifer in der Magazinposition sehr dicht an der Hülse befinden müssen, um die Konusse der Werkzeughalter in die Hohlräume in der Hülse einbringen zu können. Wegen der Abmaße der Greifer, die sich beim Verschwenken zwischen der Magazinposition und der Arbeitsposition nicht gegenseitig behindern dürfen, ist die Gesamtzahl der Greifarme und damit der zu verwendenden Werkzeuge bei der bekannten Werkzeugmaschine begrenzt. Sie liegt üblicherweise zwischen 10 und 12.

Bei vielen Werkstücken ist es jedoch erforderlich, während der Bearbeitung mehr als 12 unterschiedliche Werkzeuge zu verwenden. Bei der bekannten Werkzeugmaschine muß daher die Bearbeitung eines solchen Werkzeuges in zwei separaten Arbeitsgängen auf zwei unterschiedlich gerüsteten Werkzeugmaschinen erfolgen. Dies führt nicht nur zu höheren Investitionskosten für eine zweite Werkzeugmaschine, sondern ebenfalls dazu, daß sich die gesamte Bearbeitungszeit für ein derartiges Werkstück wegen des erforderlichen Umspannens deutlich erhöht. Darüberhinaus ist die Maßhaltigkeit bei einem auf zwei unterschiedlichen Werkzeugmaschinen bearbeiteten Werkstück nicht immer zufriedenstellend.

Der Erfindung liegt daher die Aufgabe zugrunde, eine Werkzeugmaschine der eingangs genannten Art dahingehend weiterzubilden, daß die vorstehend genannten Nachteile vermieden werden. Insbesondere soll es bei konstruktiv und fertigungstechnisch einfachem Aufbau möglich werden, während eines Bearbeitungsvorganges eine größere Anzahl von Werkzeugen verwenden zu können.

Diese Aufgabe wird erfindungsgemäß dadurch gelöst, daß die Köcher an den Greifarmen angeordnet sind.

Die der Erfindung zugrundeliegende Aufgabe wird auf diese Weise vollkommen gelöst. Weil bei der neuen Werkzeugmaschine die Köcher an den Greifarmen angeordnet sind, können die Köcher und damit die Greifer in der Magazinposition radial nach außen von der Hülse abgesetzt werden. Die Greifer liegen in der Magazinposition nun auf einem Umfangskreis um die Hülse herum, der es gestattet, eine größere Anzahl von Greifern und damit Werkzeughaltern mit Werkzeugen an der neuen Werkzeugmaschine vorzusehen.

Dieses ist an sich überraschend, da die Greifarme einerseits weiterhin an der Hülse angeordnet sein müssen und andererseits sogar noch zusätzlich die Köcher tragen. Es hat sich jedoch herausgestellt, daß die erfindungsgemäßen Maßnahmen an den Greifarmen nicht - wie zu erwarten gewesen wäre - nachteilig sind, sondern es im Gegenteil ermöglichen, eine größere Anzahl von Greifarmen an der Hülse vorzusehen.

Bei einem Ausführungsbeispiel der neuen Werkzeugmaschine ist es bevorzugt, wenn während des Verschwenkens eines Werkzeughalters zwischen der Magazinposition und der Arbeitsposition der zugeordnete Köcher mit seiner Längsachse im wesentlichen parallel zu einer Längsachse des Werkzeughalters ausgerichtet ist.

Diese Maßnahme ist besonders vorteilhaft, weil die Köcher so sehr paßgenau zu den Werkzeughaltern ausgebildet werden können, da diese beim Eintauchen in die Köcher bzw. beim Herausfahren keine große seitliche Schwenkbewegung machen. Da somit die radialen Abmaße der Köcher jene der Werkzeughalter nur geringfügig überschreiten, ermöglicht es auch diese Maßnahme, die Zahl der Greifarme zu erhöhen.

Weiterhin ist es bevorzugt, wenn die Längsachse des Werkzeughalters und die Längsachse des Köchers im wesentlichen stets parallel zu der Spindelachse ausgerichtet sind.

Durch diese Maßnahme wird in vorteilhafter Weise sichergestellt, daß die Werkzeughalter auf ihrem Weg zwischen der Magazinposition und der Arbeitsposition wenig Raum beanspruchen, so daß benachbarte Werkzeughalter noch enger zusammengelegt werden können, ohne sich gegenseitig zu beeinflussen. Auch hierdurch läßt sich also die Anzahl der Greifarme an der neuen Werkzeugmaschine in vorteilhafter Weise erhöhen.

Ferner ist es bevorzugt, wenn die Greifarme Teil einer Parallelogrammführung sind, die zwei zueinander parallele Stäbe aufweist, und wenn der Köcher mit einer ersten Achse an dem ersten Stab und mit einer zweiten Achse an dem zweiten Stab gelagert ist, wobei eine gedachte Verbindungslinie zwischen den beiden Achsen im wesentlichen parallel zu von den Stäben verschiedenen Seiten der Parallelogrammführung ausgerichtet ist.

Diese Maßnahme ist insbesondere unter konstruktiven und fertigungstechnischen Aspekten von Vorteil, da die parallelachsige Ausrichtung des Köchers zu dem Werkzeughalter durch die Parallelogrammführung sichergestellt ist. Es sind keine zusätzlichen Maßnahmen an den Greifarmen erforderlich, die deren Ausladung vergrößern könnten. Da der Köcher auf diese Weise beim Verschwenken der Greifarme mitbewegt wird, kann er noch paßgenauer und damit kleiner ausgelegt werden. Die völlige Loslösung von dem bekannten Konzept der starren Anordnung der Köcher in der Hülse führt folglich unvorhergesehenermaßen dazu, daß die Zahl der Greifarme und damit die Zahl der während eines Bearbeitungsvorganges verfügbaren Werkzeuge bei der erfindungsgemäßen Werkzeugmaschine gegenüber der bekannten Werkzeugmaschine vergrößert ist.

Bei diesem Ausführungsbeispiel ist es besonders bevorzugt, wenn der Köcher aus Kunststoff gefertigt und mit seinen Achsen steckbar an dem Greifarm befestigt ist.

Diese Maßnahme führt einerseits zu einer Gewichtsersparnis, denn die Kunststoffköcher sind erheblich leichter, als der beim Stand der Technik vorgesehene, radiale Vorsprung der Hülse. Darüberhinaus bietet diese Maßnahme auch fertigungstechnische Vorteile, denn das Spritzen oder Gießen von Kunststoffteilen ist erheblich kostengünstiger durchzuführen, als die beim Stand der Technik erforderliche Metallbearbeitung, um die Hohlräume in der Hülse auszubilden. Wegen der steckbaren Anordnung der Köcher ist die neue Werkzeugmaschine darüberhinaus sehr servicefreundlich, denn die Werkzeughalter können nach dem Entfernen der Köcher auch in der Magazinposition gewartet und/oder überprüft werden.

Bei dem aus Kunststoff gefertigten und damit nachgiebigen Köcher sind die Anforderungen an seine Achsen bezüglich der Parallelität zu den Seiten des Parallelogrammes gering. Eine Abweichung von dieser Parallelität führt nicht zu einem Verklemmen der Greifarme, sondern wird durch den nachgebenden Köcher ausgeglichen.

Ferner ist es bevorzugt, wenn an dem Greifarm ein Deckel vorgesehen ist, der den Köcher selbsttätig verschließt, wenn sich der zugehörige Werkzeughalter in der Arbeitsposition befindet.

Diese an sich bekannte Maßnahme bietet den Vorteil, daß ohne zusätzliche die Ausladung der Greifarme vergrößernde Maßnahmen der bei in Arbeitsposition befindlichem Werkzeughalter sonst offene Köcher verschlossen und vor herumfliegenden Spänen geschützt wird. Die Vermeidung einer größeren Ausladung der Greifarme führt - wie oben erwähnt - dazu, daß eine größere Anzahl von ihnen, nämlich bis zu 20, auf dem Umfang der Hülse angeordnet ist.

Weitere Vorteile ergeben sich aus der Beschreibung und der beigefügten Zeichnung.

Ein Ausführungsbeispiel der Erfindung ist in der Zeichnung dargestellt und wird in der nachfolgenden Beschreibung näher erläutert. Es zeigen:
- Fig. 1: eine Seitenansicht, teilweise geschnitten, durch eine Werkzeugwechseleinrichtung einer erfindungsgemäßen Werkzeugmaschine, mit einem in Magazinposition befindlichen Werkzeughalter;
- Fig. 2: eine Darstellung, ähnlich Fig. 1, jedoch für den Werkzeughalter in einer Zwischenposition;
- Fig. 3: eine weitere Darstellung, ähnlich Fig. 1, jedoch für einen Werkzeughalter in Arbeitsposition; und
- Fig. 4: eine Ansicht der Werkzeugmaschine aus Fig. 1 in Richtung des Pfeiles IV aus Fig. 1, geschnitten und im Ausschnitt.

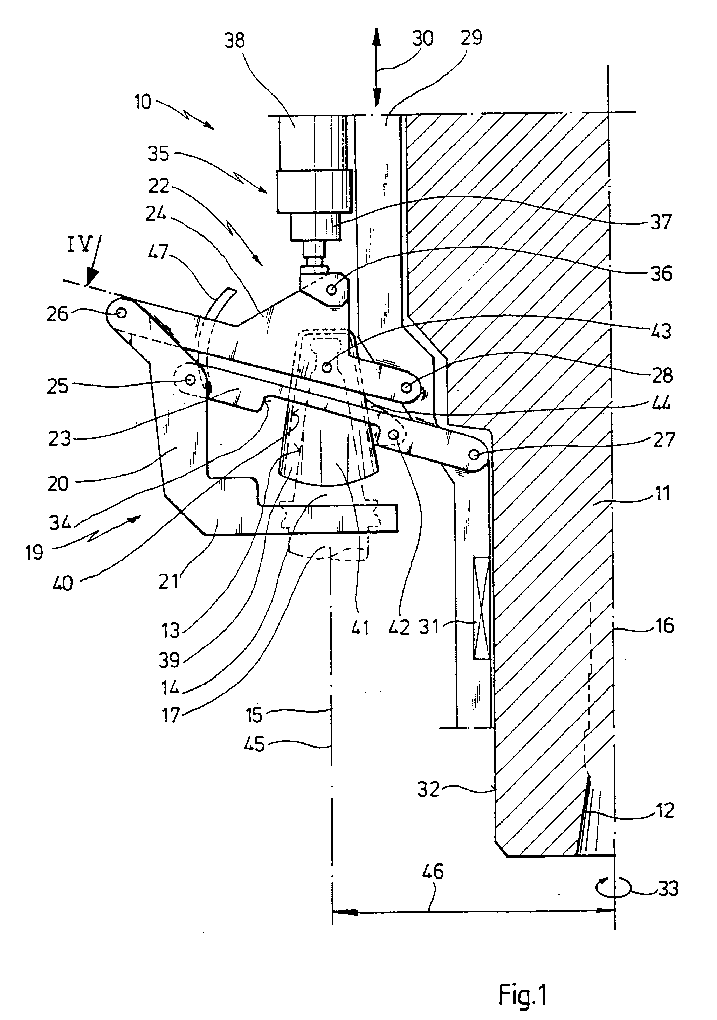

In Fig. 1 ist mit 10 eine erfindungsgemäße Werkzeugmaschine bezeichnet, deren Spindelstock eine rotierende Spindel 11 aufweist, in der eine Aufnahme 12 vorgesehen ist.

Die Aufnahme 12 der Spindel 11 ist so ausgelegt, daß sie komplementär zu einem Konus 13 eines genormten Werkzeughalters 14 ausgebildet ist. In der Werkzeugmaschine 10 werden die Werkzeughalter 14 mit ihren Achsen 15 parallel zu einer Spindelachse 16 gehalten. Die Werkzeughalter 14 sind unterhalb des Konus 13 mit einem Ringflansch 17 versehen, an den sich nach unten ein in den Fig. nicht dargestelltes Werkzeug, beispielsweise ein Fräser, anschließt.

Bei der Werkzeugmaschine 10 sind mehrere Werkzeughalter 14 um die Spindel 11 herum angeordnet und können jeweils einzeln aus der in Fig. 1 dargestellten Magazinposition der Werkzeughalter 14 in eine Arbeitsposition in die Aufnahme 12 der Spindel 11 eingesetzt werden.

Zum Einwechseln von Werkzeughaltern 14 in die Spindel 11 bzw. zum nachfolgenden Auswechseln ist ein Werkzeugwechsler 19 vorgesehen, der im wesentlichen aus einem fremdkraftsbetätigten Greifarm 20 besteht. Der Greifarm 20 geht an seinem unteren Ende in einen Greifer 21 über, der den Werkzeughalter 14 im Bereich des Ringflansches 17 ergreift. Der Greifer 21 ist dabei bevorzugt so ausgelegt, daß der Werkzeughalter 14 drehbar in ihm gehalten ist, so daß der Greifer 21 auch in der Arbeitsposition des Werkzeughalters 14 an diesem verbleibt, um so die Werkzeugwechselzeiten zu reduzieren.

Um die vertikalachsige Ausrichtung der Werkzeughalter 14 in jeder Phase des Werkzeugwechselvorganges beizubehalten, ist der Greifer 21 Teil einer Parallelogrammführung 22. Die Parallelogrammführung 22 weist einen ersten Stab 23 und einen zu diesem parallelen zweiten Stab 24 auf. Die Stäbe 23, 24 sind an dem Greifer 21 mittels einer ersten Achse 25 bzw. einer zweiten Achse 26 und an ihren jeweils entgegengesetzten Enden in einer dritten Achse 27 bzw. einer vierten Achse 28 gelagert. Die Achsen 25 bis 28 verlaufen senkrecht zu der Zeichenebene der Fig. 1.

Die dritte Achse 27 und die vierte Achse 28 sind an einer Hülse 29 angeordnet, welche die Spindel 11 umgibt. Die Hülse 29 ist in an sich bekannter Weise relativ zu der Spindel 11 und parallel zu der Spindelachse 16 verschiebbar, wie dies mit einem Pfeil 30 angedeutet ist.

Da die Spindel 11 relativ zu der Hülse 29 rotiert, ist im unteren Bereich der Hülse 29 ein Lager 31 vorgesehen, das auf einer zylindrischen Oberfläche 32 der Spindel 11 läuft. Die Drehrichtung der Spindel 11 ist mit einem Pfeil 33 angedeutet.

Der erste Stab 23 weist eine dem Lager 31 zugeordnete Aussparung 34 auf, deren Bedeutung noch erläutert wird.

Zum Betätigen des Werkzeugwechslers 19 ist eine Kolben-Zylinder-Einheit 35 vorgesehen, die über eine fünfte Achse 36 an einen oberen Vorsprung des oberen zweiten Stabes 24 angelenkt ist. Die fünfte Achse 36 verläuft parallel zu den Achsen 25 bis 28. Die Kolben-Zylinder-Einheit 35 besteht im wesentlichen aus einem Kolben 37, der an der fünften Achse 36 gelenkig angreift, sowie aus einem Zylinder 38, der an seinem in Fig. 1 nicht dargestellten oberen Ende schwenkbar an einem radialen Vorsprung der Hülse 29 gelagert ist.

Fig. 1 zeigt den Werkzeughalter 14 in der Magazinposition, in welcher der Kolben 37 vollständig in den Zylinder 38 eingezogen ist. Auch die Hülse 29 befindet sich in ihrer oberen Endstellung relativ zu der Spindel 11.

Die Stäbe 23, 24 befinden sich in der Magazinposition in leicht aufwärts geneigter Ausrichtung, so daß die Achsen 25, 26 etwas höher liegen als die Achsen 27, 28. In dieser Lage ist der Werkzeughalter 14 mit seinem Konus 13 durch eine nach unten offene Öffnung 39 in einen Hohlraum 40 eingeführt, der in einem Köcher 41 ausgebildet ist. Der Köcher 41 ist mittels einer sechsten Achse 42 an dem ersten Stab 23 sowie mit einer siebten Achse 43 an dem zweiten Stab 24 gelagert, so daß er beim Verschwenken der Parallelogrammführung 22 mitbewegt wird. Die sechste Achse 42 ist mittels einer an dem Köcher 41 vorgesehenen Lasche 44 seitlich von der siebten Achse 43 so abgesetzt, daß eine gedachte Verbindungslinie zwischen den Achsen 42 und 43 parallel zu gedachten Verbindungslinien zwischen den Achsen 25 und 26 bzw. 27 und 28 verläuft.

Auf diese Weise wird der Köcher 41 mit seiner bei 45 angedeuteten Längsachse während des Verschwenkens des Greifarmes 20 parallel zu der Spindelachse 16 gehalten. In der in Fig. 1 dargestellten Magazinposition stimmen die Längsachse 15 des Werkzeughalters 14 und die Längsachse 45 des Köchers 41 überein und weisen einen bei 46 angedeuteten radialen Abstand zu der Spindelachse 16 auf.

Zum Verschließen des Köchers 41 ist an dem zweiten Stab 24 ein Deckel 47 in Form eines Hohlzylindersegmentes vorgesehen.

Der Konus 13 des Werkzeughalters 14 ist durch den Köcher 41 vollständig abgedeckt und somit vor Metallspänen und Bohrwasser geschützt, das bei der Bearbeitung eines Werkstückes in dem Arbeitsraum der Werkzeugmaschine 10 herumfliegt.

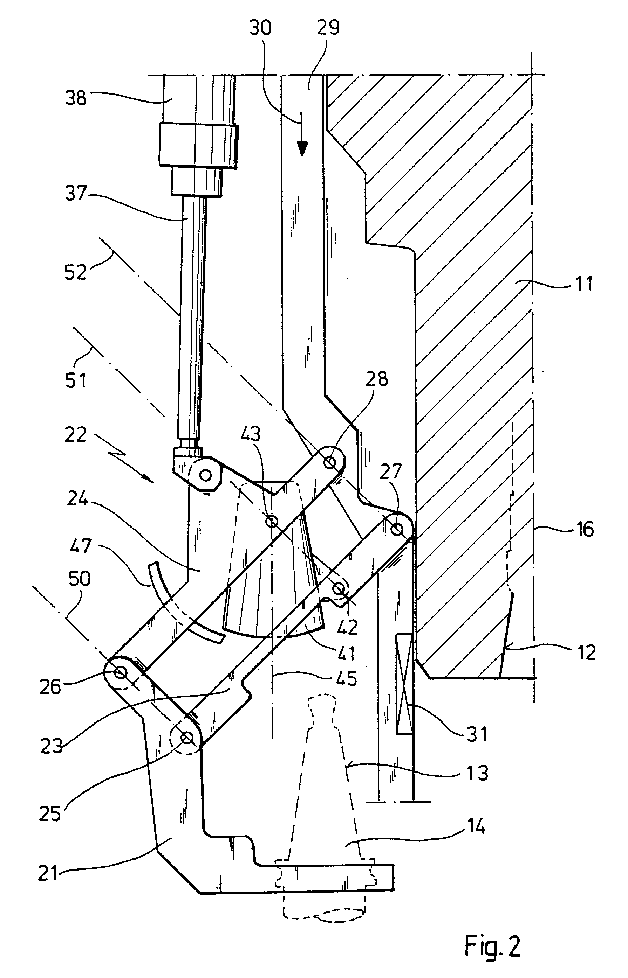

Fig. 2 zeigt eine Zwischenposition, in der der Kolben 37 teilweise nach unten aus dem Zylinder 38 ausgefahren wurde. Gleichzeitig wurde die Hülse 29 in Richtung des Pfeiles 30 nach unten verfahren. Infolgedessen nehmen die Stäbe 23, 24 eine nach links unten schräg geneigte Position ein. Durch die Absenkung der Hülse 29 befindet sich jetzt der Konus 13 des Werkzeughalters 14 unterhalb der Unterkante der Spindel 11.

In Fig. 2 sind mit 50, 51 und 52 gedachte Verbindungslinien zwischen den Achsen 25 und 26 sowie 42 und 43 bzw. 27 und 28 bezeichnet, von den die Verbindungslinien 50 und 52 den Seiten des Parallelogrammes entsprechen. Es ist zu erkennen, daß die Verbindungslinien 50, 51 und 52 im wesentlichen parallel zueinander verlaufen, so daß die Parallelogrammführung 22 nicht verklemmen kann. In dem gezeigten Ausführungsbeispiel ist der Köcher 41 aus Kunststoff gefertigt, so daß eine leichte Abweichung der Parallelität der Verbindungslinie 51 zu den Verbindungslinien 50 und 52 nicht dazu führt, daß die Parallelogrammführung 22 verklemmt, denn das Kunststoffmaterial des Köchers 41 gibt bei Verspannungen zwischen den Achsen 42 und 43 nach.

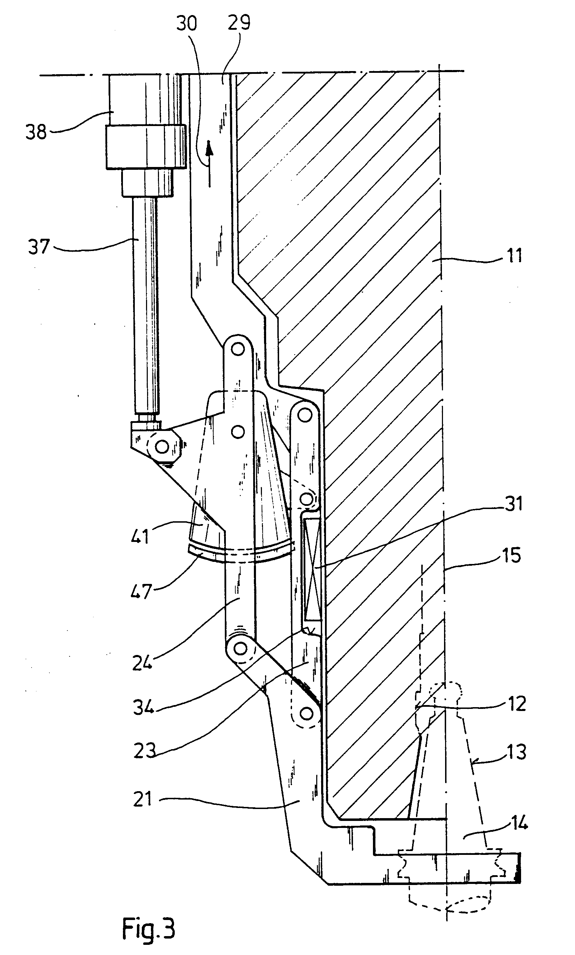

Wie Fig. 3 zeigt, ist die Anordnung so getroffen, daß bei weiterem Ausfahren des Kolbens 37 die Stäbe 23 und 24 noch weiter nach unten verschwenkt werden, bis sie eine vertikale Endposition erreichen, in welcher der Werkzeughalter 14 mit der Spindelachse 16 fluchtet.

Man erkennt aus Fig. 3 ferner, daß das Lager 31 gerade in die Aussparung 34 des ersten Stabes 23 paßt, wenn dieser in der Arbeitsposition des zugehörigen Werkzeughalters 14 in etwa parallel zu der Spindelachse 16 ausgerichtet ist.

Wird nun die Hülse 29 in dieser Stellung der Parallelogrammführung 22 wieder in Richtung des Pfeiles 30 nach oben verschoben, gelangt der Werkzeughalter 14 mit seinem Konus 13 in die Aufnahme 12 der Spindel 11, so daß der Werkzeughalter 14 dort mit den üblichen Spannzangen oder dgl. arretiert werden kann.

In dieser Arbeitsposition des Werkzeughalters 14 deckt der Deckel 47 die Öffnung 39 des Köchers 41 vollständig ab, so daß keine herumfliegenden Späne in den Köcher 41 des in der Arbeitsposition befindlichen Werkzeughalters 14 gelangen können.

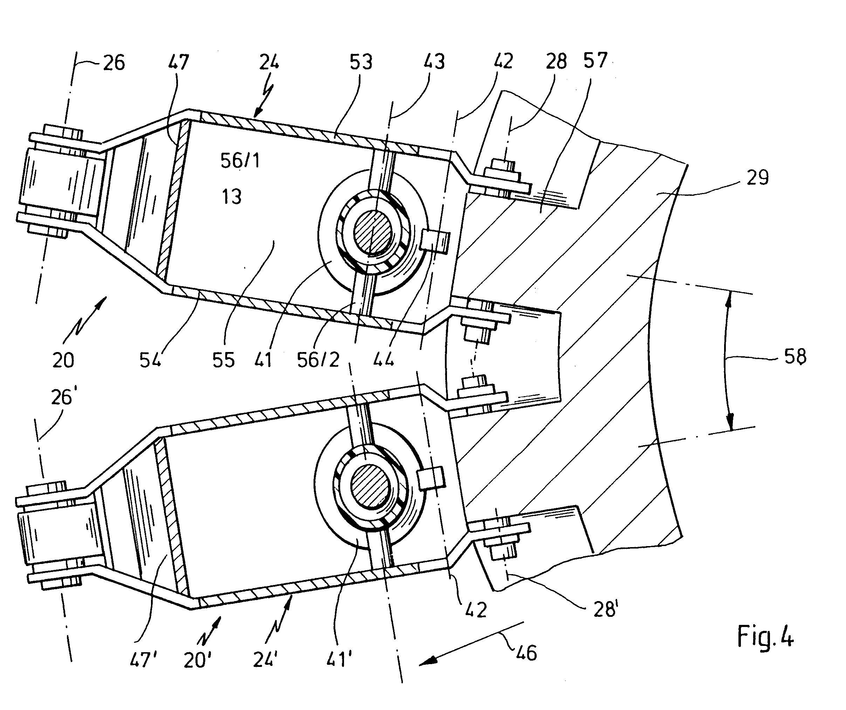

In Fig. 4 ist die Hülse 29 mit zwei Greifarmen 20 und 20' geschnitten und im Ausschnitt in einer Ansicht entlang des Pfeiles IV aus Fig. 1 dargestellt. Aus Übersichtlichkeitsgründen ist von den untereinander gleichen Greifarmen 20 und 20' jeweils nur der obere zweite Stab 24 bzw. 24' dargestellt. Der zweite Stab 24 weist zwei klappsymmetrisch angeordnete Seitenteile 53 und 54 auf, die an ihren Enden in den Achsen 26 und 28 zusammengefaßt sind. Der Deckel 47 erstreckt sich zwischen den Seitenteilen 53 und 54 und steift diese aus. Wie Fig. 4 zeigt, begrenzen die beiden Seitenteile 53 und 54 zwischen sich einen Freiraum 55, in dem der Werkzeugköcher 40 angeordnet ist. In der Schnittdarstellung ist ebenfalls der Konus 13 zu erkennen.

Der Köcher 41 ist über zwei seitliche Zapfen 56/1 und 56/2 von innen in die Seitenteile 53 bzw. 54 eingeklipst. Auf diese Weise kann der Werkzeugköcher 41 zu Servicezwecken leicht von dem zweiten Arm 24 abgenommen werden. Die seitlichen Zapfen 56, die sowohl einstückig mit dem Köcher 41 sein können als auch Teil einer auf dem Köcher 41 sitzenden Blechhaube, bilden die Achse 43 des Köchers 41. Die Achse 42, die durch die in Fig. 4 angedeutete Lasche 44 führt, ist in gleicher Weise steckbar oder schraubbar mittels eines Bolzens mit dem ersten Stab 23 verbunden, was jedoch in Fig. 4 nicht zu erkennen ist.

Der Köcher 41 ist vollständig in dem Freiraum 55 aufgenommen, so daß er seitlich in Richtung der Achsen 43 bzw. 42 nicht über den zweiten Stab 24 hinausragt. Auf diese Weise ist die Breite der Greifarme 20 bzw. 20' durch die Befestigung des zweiten Stabes 24 an der Achse 28 vorgegeben. Die Achse 28 steckt in an sich bekannter Weise in einem radialen Vorsprung 57 der Hülse 29.

Der radiale Abstand 46 der Köcher 41 und damit der in Magazinposition befindlichen Greifer 21 von der Spindelachse 16 ist so groß, daß insgesamt zwanzig Greifarme 20 längs des Umfanges der Hülse 29 gleichverteilt angeordnet werden können. Je zwei benachbarte Greifarme 20, 20' schließen zwischen sich einen bei 58 angedeuteten Winkel ein, der in dem gewählten Ausführungsbeispiel 18° beträgt. Obwohl die Hülse 29 bei der erfindungsgemäßen Werkzeugmaschine - wegen des nun nicht mehr erforderlichen radialen Vorsprunges zur Aufnahme der Hohlräume - einen geringeren Außendurchmesser aufweist als bei der Werkzeugmaschine nach dem Stand der Technik, sind wegen der außerhalb der Hülse 29 angeordneten Köcher 41 deutlich mehr Greifarme 20 am Umfang der Hülse 29 angeordnet.

## Patentansprüche

1. Werkzeugmaschine mit einer um eine Spindelachse (16) rotierenden Spindel (11), mit einer relativ zu der Spindel (11) in Richtung der Spindelachse (16) verschiebbaren Hülse (29) und mit einer Anzahl von Greifarmen (20), die um die Spindel (11) herum verteilt angeordnet und an der Hülse (29) befestigt sind, wobei jeder Greifarm (20) einen einen Konus (13) aufweisenden Werkzeughalter (14) trägt und wobei jeder Werkzeughalter (14) mittels des ihn tragenden Greifarmes (20) aus einer von der Spindel (11) beabstandeten Magazinposition einzeln mit dem Konus (13) in eine Arbeitsposition in die Spindel (11) einsetzbar ist, während die übrigen Werkzeughalter (14) in der Magazinposition gehalten werden, in der sie jeweils in einen separaten, nach unten offenen Köcher (41) eingeführt sind, der mindestens für den jeweiligen Konus (13) eine Abdeckung bildet, dadurch gekennzeichnet, daß die Köcher (41) an den Greifarmen (20) angeordnet sind.

2. Werkzeugmaschine nach Anspruch 1, dadurch gekennzeichnet, daß während des Verschwenkens eines Werkzeughalters (14) zwischen der Magazinposition und der Arbeitsposition der zugeordnete Köcher (14) mit seiner Längsachse (45) im wesentlichen parallel zu einer Längsachse (15) des Werkzeughalters (14) ausgerichtet ist.

3. Werkzeugmaschine nach Anspruch 2, dadurch gekennzeichnet, daß die Längsachse (15) des Werkzeughalters (14) und die Längsachse (45) des Köchers (41) im wesentlichen stets parallel zu der Spindelachse (16) ausgerichtet sind.

4. Werkzeugmaschine nach Anspruch 3, dadurch gekennzeichnet, daß die Greifarme (20) Teil einer Parallelogrammführung (22) sind, die zwei zueinander parallele Stäbe (23, 24) aufweist, und daß der Köcher (41) mit einer ersten Achse (42) an dem ersten Stab (23) und mit einer zweiten Achse (43) an dem zweiten Stab (24) gelagert ist, wobei eine gedachte Verbindungslinie (51) zwischen den beiden Achsen (42, 43) im wesentlichen parallel zu von den Stäben (23, 24) verschiedenen Seiten (50, 52) der Parallelogrammführung (22) ausgerichtet sind.

5. Werkzeugmaschine nach einem der vorhergehenden Ansprüche, dadurch gekennzeichnet, daß der Köcher (41) aus Kunststoff gefertigt und mit seinen Achsen (42, 43) steckbar an dem Greifarm (20) befestigt ist.

6. Werkzeugmaschine nach einem der vorhergehenden Ansprüche, dadurch gekennzeichnet, daß an dem Greifarm (20) ein Deckel (47) vorgesehen ist, der den Köcher (41) selbsttätig verschließt, wenn sich der zugehörige Werkzeughalter (14) in der Arbeitsposition befindet.

## Claims

1. Machine tool with a spindle (11) rotating about a spindle axis (16), with a quill (29) that can be displaced relative to the spindle (11) in the direction of the spindle axis (16), and with a number of gripper arms (20) that are arranged at intervals around the spindle (11) and are fastened to the quill (29), such that each gripper arm (20) carries a tool holder (14) which has a cone (13), and such that the cone (13) of each tool holder (14) can be individually engaged, by means of the gripper arm (20) which carries it, from a magazine position at a distance from the spindle (11) into a working position in the spindle (11), while the other tool holders (14) are retained in the magazine position in which each one is inserted into a separate sheath (41) open at the bottom, which forms a cover at least for the respective cone (13), characterized in that the sheaths (41) are located on the gripper arms (20).

2. Machine tool according to claim 1, characterized in that while a tool holder (14) is swinging between the magazine position and the working position, the associated sheath (41) is aligned with its longitudinal axis (45) essentially parallel to a longitudinal axis (15) of the tool holder (14).

3. Machine tool according to claim 2, characterized in that the longitudinal axis (15) of the tool holder (14) and the longitudinal axis (45) of the sheath (41) are essentially always aligned parallel to the spindle axis (16).

4. Machine tool according to claim 3, characterized in that the gripper arms (20) are part of a parallelogram mechanism (22) that has two rods (23, 24) parallel to one another, and wherein the sheath (41) is mounted with a first pivot (42) on the first rod (23) and with a second pivot (43) on the second rod (24), with an imaginary connecting line (51) being aligned between the two pivots (42, 43), essentially parallel to sides (50, 52) of the parallelogram mechanism (22) which are different from the rods (23, 24).

5. Machine tool according to any of the foregoing claims, characterized in that the sheath (41) is made of plastic and is fastened to the gripper arm (20) by insertion of its pivots (42, 43).

6. Machine tool according to any of the foregoing claims, characterized in that a cover (47) is provided on the gripper arm (20) and automatically caps the sheath (41) when the respective tool holder (14) is in the working position.

## Revendications

1. Machine-outil avec une broche (11) tournant autour d'un axe de broche (16), avec une douille (29) pouvant être déplacée relativement à la broche (11) dans la direction de l'axe de la broche (16) et avec une pluralité de bras de préhension (20), qui sont montés en étant répartis autour de la broche (11), et sont fixés sur la douille (29), chaque bras de préhension (20) portant un porte-outil (14) présentant un cône (13) et chaque porte-outil (14) pouvant être placé individuellement avec le cône (13) au moyen du bras de préhension (20) le portant, depuis une position de rangement écartée de la broche (11), dans une position de travail dans la broche (11), alors que les autres porte-outil (14) sont maintenus dans une position de rangement, dans laquelle ils sont chacun introduits dans un étui (41) séparé, ouvert vers le bas, qui forme au moins pour le cône (13) considéré une couverture, caractérisée en ce que les étuis (41) sont montés sur les bras de préhension (20).

2. Machine-outil selon la revendication 1, caractérisée en ce que pendant le pivotement d'un porte-outil (14) entre la position de rangement et la position de travail, l'étui (14) associé est orienté avec son axe longitudinal (45) essentiellement parallèlement à un axe longitudinal (15) du porte-outil (14).

3. Machine-outil selon la revendication 2, caractérisée en ce que l'axe longitudinal (15) du porte-outil (14) et l'axe longitudinal (45) de l'étui (41) sont essentiellement toujours orientés parallèlement par rapport à l'axe de la broche (16).

4. machine-outil selon la revendication 3, caractérisée en ce que les bras de préhension (20) sont une partie d'un système de guidage en forme de parallélogramme (22), qui présente deux tiges (23, 24) parallèles l'une part rapport à l'autre,
et en ce que l'étui (41) est supporté avec un premier axe (42) sur une première tige (24), et avec un deuxième axe (43) sur une deuxième tige (24), une ligne de liaison imaginaire (51) entre les deux axes (42, 43) étant orientée de manière essentiellement parallèle aux deux côté différents (50, 52) du système de guidage en forme de parallélogramme (22), parallèles au tiges (23, 24).

5. Machine-outil selon l'une quelconque des revendications précédentes, caractérisée en ce que l'étui (41) est réalisé en matière plastique et est fixé de manière encliquetable avec ses axes (42, 43) sur un bras de préhension (20).

6. Machine-outil selon l'une quelconque des revendications précédentes, caractérisée en ce qu'un couvercle (47) est prévu sur le bras de préhension (20), qui ferme automatiquement l'étui (41), lorsque le porte-outil (14) correspondant se trouve dans la position de travail.
